# EUROPEAN PATENT SPECIFICATION

(11) **EP 0 748 095 B1**
(45) Date of publication and mention of the grant of the patent: **16.03.2005**
(21) Application number: 96303819.5
(22) Date of filing: 29.05.1996
(51) Int. Cl.: H04L 29/06

(54) **System and method for database access administration**
Vorrichtung und Verfahren zum Verwalten der Datenbankzugriffe
Système et méthode de gestion des accès à une base de données

(30) Priority: 25.08.1995 US 519268; 06.06.1995 US 469276
(43) Date of publication of application: 11.12.1996
(73) Proprietor: The Cooper Union for the Advancement of Science and Art, New York, NY 10003 (US)
(72) Inventor: Baker, Brenda Sue, Berkeley Heights, New Jersey 07922 (US); Grosse, Eric, Berkeley Heights, New Jersey 07922 (US)
(74) Representative: Harding, Richard Patrick

(56) References cited:
- US-A- 5 400 335
- SANDHU R S ET AL: "ACCESS CONTROL: PRINCIPLES AND PRACTICE" IEEE COMMUNICATIONS MAGAZINE, vol. 32, no. 9, 1 September 1994, pages 40-48, XP000476554
- CARDENAS A. F. : " DATA BASE MANAGEMENT SYSTEMS. " 1984 , ALLYN & BACON. , 1984 XP002075270 081911 * page 593 - page 611 *
- LUOTONEN A ET AL: "World-Wide Web proxies" COMPUTER NETWORKS AND ISDN SYSTEMS, vol. 27, no. 2, November 1994, page 147-154 XP004037985
- RAGGETT D: "A review of the HTML + document format" COMPUTER NETWORKS AND ISDN SYSTEMS, vol. 27, no. 2, November 1994, page 135-145 XP004037984
- CLAUSNITZER A ET AL: "A WWW interface to the OMNIS/Myriad literature retrieval engine" COMPUTER NETWORKS AND ISDN SYSTEMS, vol. 27, no. 6, April 1995, page 1017-1026 XP004013203

## Description

### Technical Field

The invention relates to controlling database access and, more particularly, to selectively providing such control with respect to otherwise public databases.

### Backgound Of The Invention

Files or other resources on computers around the world may be made publicly available to users of other computers through the collection of networks known as the Internet. The collection of all such publicly available resources, linked together using files written in Hypertext Mark-up Language ("HTML") is known as the World Wide Web ("WWW").

A user of a computer that is connected to the Internet may cause a program known as a client to request resources that are part of the WWW. Server programs then process the requests to return the specified resources (assuming they are currently available). A standard naming convention has been adopted, known as a Uniform Resource Locator ("URL"). This convention encompasses several types of location names, presently including subclasses such as Hypertext Transport Protocol ("http"), File Transport Protocol ("ftp"), gopher, and Wide Area Information Service ("WAIS"). When a resource is downloaded, it may include the URLs of additional resources. Thus, the user of the client can easily learn of the existence of new resources that he or she had not specifically requested.

The various resources accessible via the WWW are created and maintained by many different people on computers around the world, with no centralized control of content. As particular types of information or images contained in this uncontrolled information collection may not be suitable for certain users, it may be desirable to selectively restrict access to WWW resources. For example, parents or school teachers might wish to have children access useful information, but not obscene material (which the children may be exposed to as a result of innocent exploration of the WWW, or through the incidental downloading of a URL). Another example is the case of school teachers who would like their students to access just a particular group of resources during a class meeting. A third example is businesses that would like their employees to access only work-related resources, but not to spend their time on other WWW explorations. In general, a particular user might need to be restricted to different resources at different times, as in the case of a student restricted to different sets of resources during classes on different subjects.

Some authorities such as schools ask the users to abide by a policy statement by which they agree to restrict their exploration of the WWW, for example, by agreeing not to download obscene material. However, voluntary compliance with such a policy will not prevent the accidental downloading of resources that are not readily identifiable as forbidden or inappropriate prior to downloading and viewing.

Naturally, technical solutions such as "firewalls" are also available to limit or impede access to the WWW and Internet. These firewalls are software-based gateways that are commonly installed to protect computers on a local area network ("LAN") from being attacked by outsiders. One effect of installing a firewall is that WWW clients can no longer directly contact WWW servers. Typically, this proves too restrictive, and users resort to "proxy servers" that are directly contacted by WWW clients. These proxy servers have special abilities to forward requests through the firewall, and thereby provide communication to and from servers on the Internet. For efficiency, a proxy server may also cache some resources locally. Current clients and proxy servers yield access to every public resource in the WWW -- They are not configured to allow a particular user to request some resources, while preventing access by that user to other resources.

Some "filtering" of the available WWW resources may be effected within systems that offer indirect access. In these systems an information provider would download resources from the WWW and maintain copies of the resources. Users would access these copies. The information provider can review the resources as they are obtained from the WWW, and edit out any inappropriate or obscene material prior to making the resource available to users. A disadvantage of this scheme is that the material provided by the information provider may be out-of-date compared to the original resource on the WWW.

In an alternate scheme of "filtered" access to WWW resources, a proxy server provides a user with a menu of allowed resources that may be accessed, and users can obtain any resources that can be reached by a series of links from the menu resources. The user is only permitted to request URLs via this menu. This particular method has two disadvantages. First, many resources must be excluded from the menu because they contain links to inappropriate material, even though they themselves might be acceptable. Second, a resource may change over time to include new links that might lead to inappropriate material, and thereby provide a user with an unintended pathway of access to such.

In still another method of "filtered" access to WWW resources, the client or proxy server checks each resource for a list of disallowed words (i.e.; obscenities; sexual terms, etc.) and shows the user only those resources that are free of these words. However, this method does not permit filtering of images and does not prohibit resources that might be inappropriate due to content other than specific words.

. Yet another means of protecting users from inappropriate or obscene materials has been established by the computer and video game manufacturers. The games are voluntarily rated on the dimensions of violence, nudity/sex, and language. Although such conventions have not yet been adopted in the WWW, the analog would be to add such ratings to WWW resources, presumably with digital signatures to prevent forgery. A WWW client could then, if so programmed, choose not to save or display any resource that is unrated or has an unacceptable rating for the given audience. The disadvantage of this scheme is the need to convince the many people who provide useful servers (often on a non-professional or pro bono basis) to coordinate with a rating panel.

All of the present systems for limiting user access to an uncontrolled public database resources, such as those available on the WWW, have obvious shortcomings. Presently, there exists no simple means for an authority (i.e.; teacher, supervisor, system administrator, etc.) to selectively control WWW access by one or more users, without significantly impairing the users' ability to communicate with the Internet. This is especially true if the particular authority wishing to exert such control has few computer skills with respect to the management of information/services networks.

R. S. Sandhu et al disclose, in "Access Control: Principles and Practice", IEEE Communications Magazine, Vol 32, No. 9, pp40-48 (1994), an access control service based on a matrix formulation stored in a database. The matrix associates users with resources. Each element of the matrix relates a particular user to a particular resource, and specifies the access rights of that user for that resource.

This prior approach has the disadvantages that, as the number of users and the number of resources increase, the size of the matrix increases as their product. Where there are large numbers of users and resources, the matrix formulation becomes computationally very costly. In a large system the access matrix will be enormous in size, and most of the cells are likely to be empty.

The present invention overcomes the deficiencies of prior schemes for regulating network database access by providing a system and method that allows one or more network administrators/managers to rate particular information and/or services. This rating is then employed to restrict specific system users from accessing the information/services via certain public or otherwise uncontrolled databases (i.e., the WWW and the Internet). The invention employs a relational database to determine access rights, and store rating information. The rating information database may be readily updated and modified by an administrator/manager. Within this relational database specific resource identifiers (i.e., URLs) are classified as being associated with a particular access rating. The relational database is arranged so that for each user of the system a request for a particular resource will only be passed on from the local network to a server providing a link to the public/uncontrolled database if the resource identifier has an access rating for which the user has been assigned specific permissions by an administrator/manager. In one preferred embodiment, the invention is implemented as part of a proxy server within the user's local network. In another embodiment, the system maintains a ratings resource file associated with each specific resource identifier, wherein comments, conditions, etc. relating the particular resource are stored.

According to aspects of the present invention, there is provided a system as specified in claims 1 to 13 and a method as specified in claims 14 to 21.

### Brief Description Of The Drawing

In the drawing:
FIG. 1 is a simplified diagram of an exemplary system embodying the invention;
FIG. 2 is a simplified diagram of an alternate arrangement of the system of FIG. 1 adapted to facilitate the classification of URLs into rating groups;
FIG. 3 is a simplified diagram of an alternate arrangement of the system of FIG. 1 including system management adaptations;
FIG. 4 is an illustration of ratings information returned to a system manager upon retrieval of a particular network resource;
FIG. 5 is an illustration of resource categorization information provided to a network manager; and
FIG. 6 is an illustration of a ratings editing page accessible by a network manager.

### Detailed Description Of The Invention

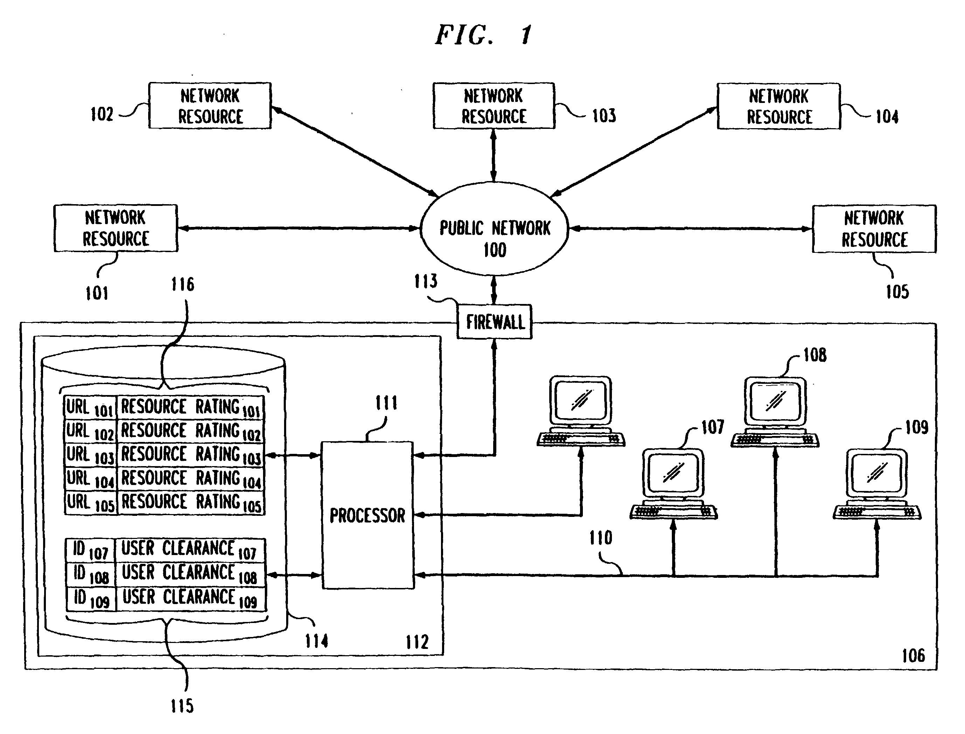

FIG. 1 is a simplified diagram of an exemplary system embodying the invention.

As shown in FIG. 1, the system includes public network 100, network resources 101-105, and user site 106. Particular users at user site 106 gain access to public network 100 via user terminals 107, 108 and 109. Each of these user terminals is linked by local area network ("LAN") 110 to processor 111 within proxy server 112. Finally, proxy server 112 provides a connection from processor 111 to public network 100 via firewall 113.

Requests from user terminals 107-109 for access to network resources (101-105) through public network 100 are submitted to processor 111 within proxy server 112. In this particular embodiment of the invention, the submitted requests are assumed to be in the form of URLs. As is well known in art, when URLs are submitted to a proxy server, the particular requesting user terminal is identified to the proxy server by an identification header attached to the URL. For the system shown in FIG. 1, the identification code for user terminal 107 is ID₁₀₇, the identification code for user terminal 108 is ID₁₀₈, and the identification code for user terminal 109 is ID₁₀₉. In addition, within the system of FIG. 1, URLs designated as URL₁₀₁, URL₁₀₂, URL₁₀₃, URL₁₀₄ and URL₁₀₅, represent requests for information from network resources 101, 102, 103, 104 and 105, respectively.

Upon receipt of an incoming URL, processor 111 is programmed to determine the identity of the requesting user terminal from the URL header. This identification information is then utilized by processor 111 to cross-reference the received URL with information stored in relational database 114. Relational database 114 contains listing 115 which associates each of the user identification codes (ID₁₀₇ , ID₁₀₈ , and ID₁₀₉) with a user clearance code (user clearance₁₀₇, user clearance₁₀₈ and user clearance₁₀₉, respectively). These user clearances indicate the particular rating class or classes of network resources that a given user terminal is allowed to access (i.e.; unlimited access; restricted use of URLs identified as accessing violent subject matter; restricted use of URLs that are identified as accessing obscene subject matter; etc). Also contained in relational database 114 is listing 116 which includes a register of allowable URLs (URL₁₀₁₋₁₀₅) that may be transmitted from a user terminal to access network resources. Listing 116 associates each of these URLs with a particular resource rating data (resource rating₁₀₁₋₁₀₅). The resource rating associated with each of said URLs can be something as simple as a rating class indicator. For example, an indication that a particular URL is approved for use by all users, or that use of a particular URL is restricted for some reason (i.e.; the URL accesses network resources that contain violent or obscene subject matter).

For example, assume that a system administrator or manager had subjectively categorized the network resources of FIG. 1 into three classes (non-violent - NV, moderately violent - MV, and violent - V) as follows: network resource 101 - NV, network resource 102 - NV, network resource 103 - NV, network resource 104 - MV, and network resource 105 - V). The URL/resource rating listing 116 would then contain the following data:

| URL | Resource Rating |
|---|---|
| URL₁₀₁ | NV |
| URL₁₀₂ | NV |
| URL₁₀₃ | NV |
| URL₁₀₄ | MV |
| URL₁₀₅ | V |

Further assume that user terminal 107 should be allowed access to all network resources (NV, MV and V); that user terminal 108 should only be allowed to access NV and MV rated resources; and that user terminal 109 should be allowed to access only NV resources. Information reflective of these user terminal clearances would be stored within listing in 115 as follows:

| User Identification | User Clearance |
|---|---|
| ID₁₀₇ | NV, MV, V |
| ID₁₀₈ | NV, MV |
| ID₁₀₉ | NV |

Within the system of FIG. 1, when a requesting user terminal transmits a URL via LAN 110, processor 111 receives the URL and the requesting user terminal identification code. Processor 111 then queries listing 115 to determine the allowable resource ratings for the particular requesting user terminal, and listing 116 to determine the resource rating of the network resource that will be accessed by the particular received URL. If a URL requesting network resource 101 was received by processor 111 from user terminal 107, list 115 and 116 within relational database 114 would yield information indicating that user terminal 107 was cleared to access NV, MV and V rated network resources, and that URL₁₀₁ had a rating of NV. As the rating of the requested resource was one of the ratings for which the requesting user terminal had clearance, processor 111 would forward the request for information (URL₁₀₁) to public network 100 via firewall 113. Assuming the requested resource was available, public network returns the requested information to user terminal 107 via firewall 113, processor 111 and LAN 110. Contrastingly, if a URL having a rating that the requesting user terminal is not cleared for is received by processor 111, that request for information is denied. For instance, if URL₁₀₅, is received by processor 111 from user terminal 109, relational database 114 is accessed. Since the data within listings 115 and 116 show that URL₁₀₅, has a rating of V, and that user terminal 109 is cleared to access only NV rated network resources, processor 111 denies the request for information, and no URL is sent to public network 100. Processor 111 could also be programmed to deny all requests from user terminals for un-rated resources. This would prohibit the accessing of network resources that had not been reviewed or rated by the system administrator/manager. It will also be understood from the above description of the invention that images contained within a given resource (i.e., in-line images) are subject to the same rating given to the resource. There would be no need to rate the in-line images separately.

In the particular embodiment described above, relational database 114 stores a list of user terminal identification codes and the various user clearances reflective of the ratings of network resources that each user terminal should be allowed to retrieve from public network 100. It will be understood that the invention could be modified so that the list of user clearances associated with a given user terminal identification code serves as a restrictive list (i.e.; that user is not allowed to retrieve network resources having that rating). This restrictive listing functionality could be readily facilitated by reprogramming processor 111. In addition, the invention could be modified so that the identification codes recognized by processor 111 and stored in relational database 114 are user specific, as opposed to user terminal specific. In other words, the system of FIG. 1 could be modified so that a given individual using a terminal is identified to the system by a personal password or other identifying code. Access or denial of the transmission of particular URLs is effected by the system as a function of that person's identity, regardless of the particular user terminal they may be utilizing.

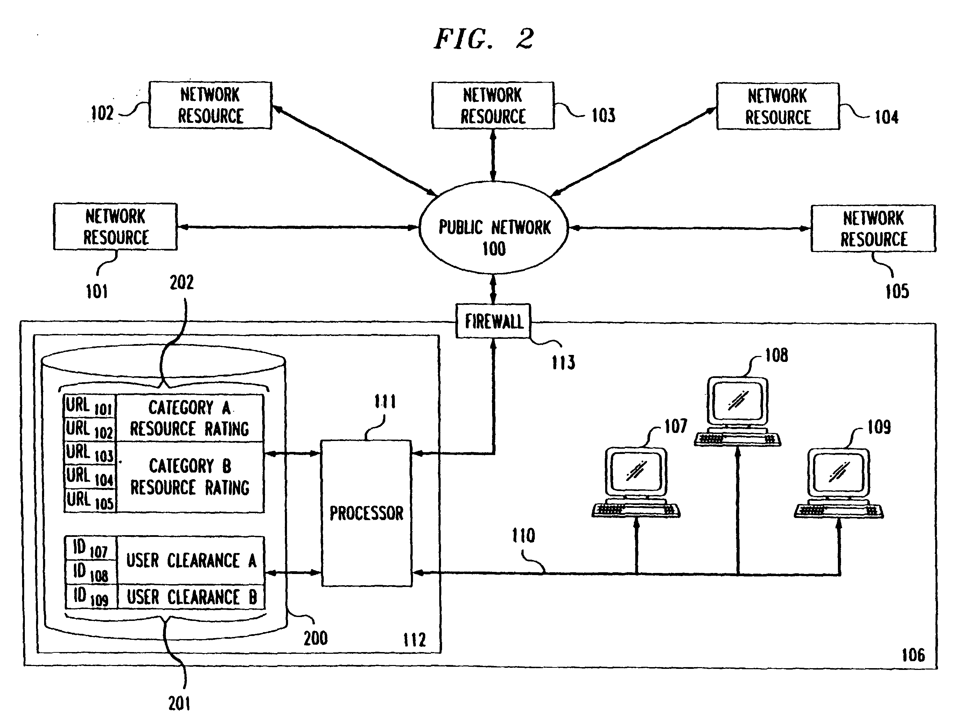

The above described system may also be modified so that URLs are identified as being in a rating category within the memory structure of a relational database. FIG. 2 provides a simplified diagram of a system similar to that of FIG. 1, but adapted to facilitate the classification of URLs into rating groups. As shown, relational database 200 includes user identification code listing 201 and URL listing 202. Listing 201 designates user identification codes ID₁₀₇ and ID₁₀₈ as being in the user clearance A category, and ID₁₀₉ as being in the user clearance B category. Upon receipt of an incoming URL, processor 111 ascertains the identity of the requesting user terminal from the URL header, and then utilizes this identification information to determine the clearance category specified for that particular user within listing 201. The particular URL received by processor 111 is then cross-referenced with listing 202 to determine the associated resource rating category. If the requesting user has a clearance that corresponds to resource rating associated with the requested URL, processor 111 forwards the URL to public network 100 via firewall 113. Public network 100 returns the requested information to the identified user via firewall 113, processor 111 and LAN 110. Contrastingly, if a URL is included in a resource rating category for which the requesting user is not cleared, processor 111 denies the request for information.

In addition, the URL rating data within the above described systems can include a text listing of the rationale upon which a given rating is based, or additional information that facilitates more complex conditional rating schemes. As an illustration of a conditional rating for a URL assume that a the resource rating associated with a particular URL has been rated V for violent, and that all the terminals within a given school have clearances of NV (no violence). Therefore, in general, none of the school terminals would be granted use of the V rated URL. However, situations could arise that require exception to this general rule. For example, a certain terminal associated with a history class could need to access a particular resource that contained violent, but relevant information on an historic military battle. To facilitate access to such resources, the relational database rating information for the military battle resource would be augmented to reflect the conditional rating of "NV for user terminals located in history classrooms; V for all other terminals". With this conditional system, history class terminals would be restricted from all other "violent" rated URLs, but still be capable of accessing historically significant, yet violent, network resources. Conditional access could also be granted to terminals or users a function of time (i.e.; access limited to certain times of day for certain users or user terminals).

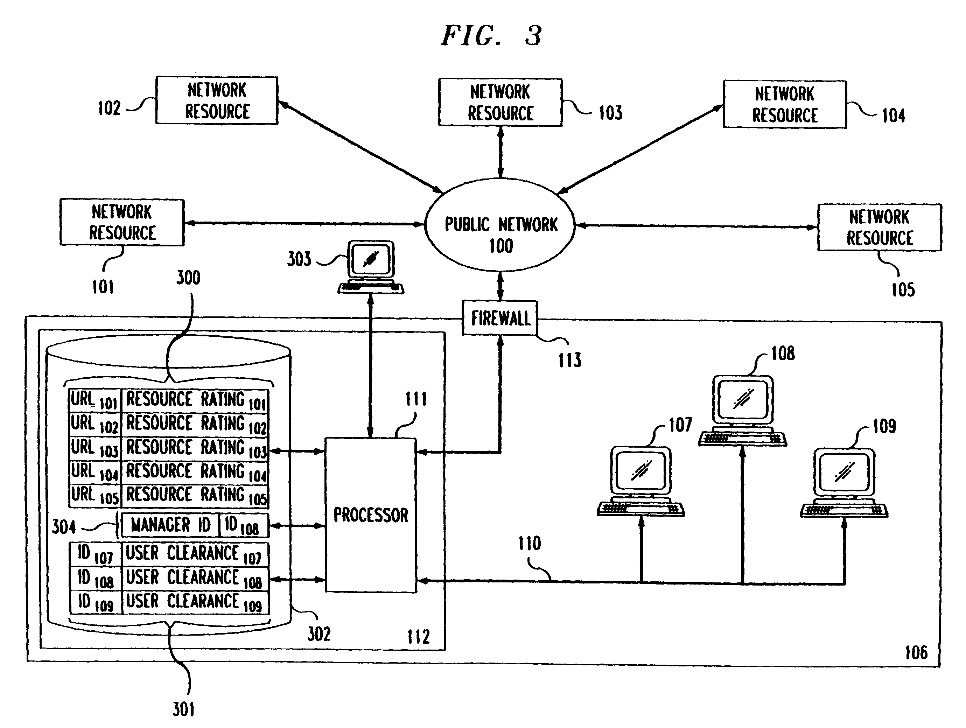

As stated above, the relational databases within thesystems of FIG. 1 and FIG. 2 contain listings of user/user terminal identification codes and URLs. These listings are subjectively categorized or rated to facilitate the selective access of otherwise public network resources. This categorization/rating was assumed to be have been performed by a system manager, and is effected by modifying the contents of the relational database utilized in practicing the invention Within the system shown in FIG. 3, processor 111 can be programmed to allow resource categorization information (listing 300) and/or user/user terminal clearance information (listing 301) within relational database 302 to be modified only by a specific dedicated management terminal 303. Restricting ability to "write" new information into relational database 302 to management terminal 303 minimizes opportunities for database tampering. Alternately, the system can also be configured to permit database modification to be performed from any one of user terminals 107, 108 or 109. To protect against corruption of the contents of relational database 302, authorization for altering the contents of relational database 302 from a user terminal is controlled via use of a manager identifier. For example, if a system manager wished to modify relational database 302 from user terminal 108, he or she would enter a password identifying themselves as an authorized system manager. The password is received by processor 111 and compared with the contents of manager ID memory listing 304. If the received manager ID password corresponds to one stored in listing 304, then user terminal 108 is identified as a manager terminal (as indicated by ID₁₀₈ being stored within listing 304). Modifications to the contents of relational database 302 may then be effected from that user terminal. When all modifications have been completed, the manager logs off and user terminal 108 returns to standard user terminal status (i.e., ID₁₀₈ is cleared from listing 304).

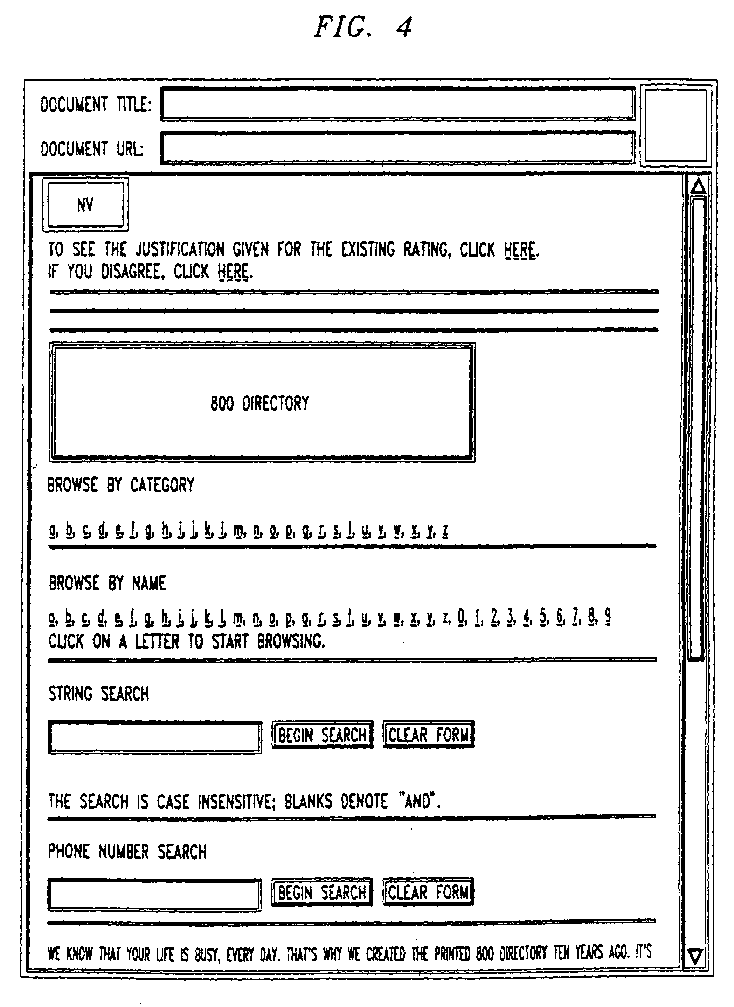

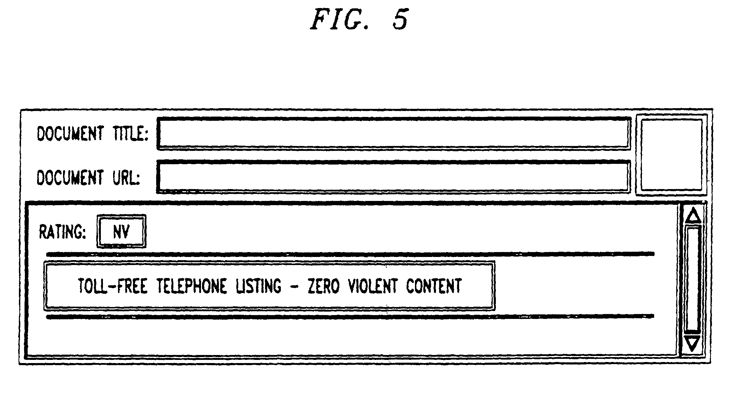

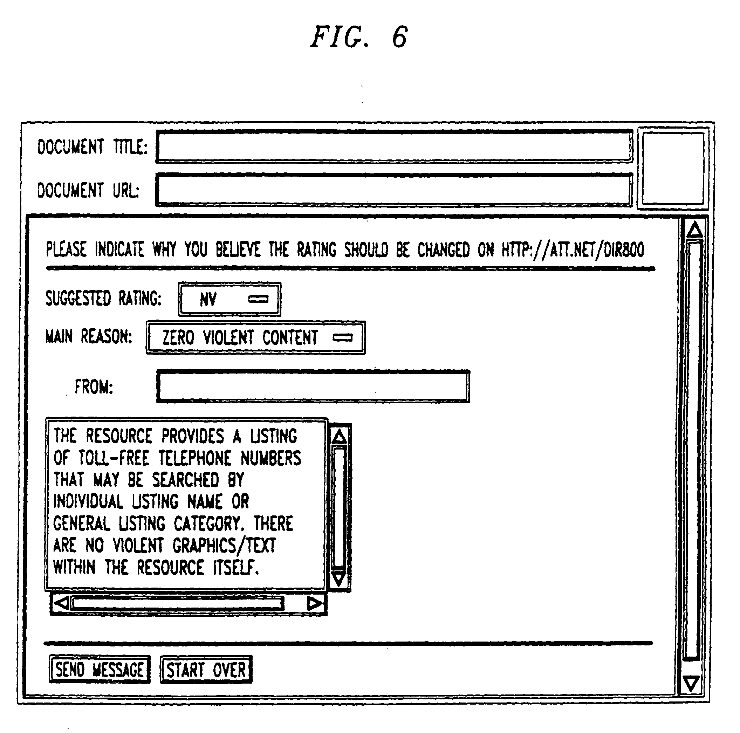

With the ever increasing proliferation of information systems in home, school and work environments, it is often the case that the responsibility of managing information access falls upon one or more individuals that are less than expert with respect to computer or information systems. Any of the above described systems can be implemented in a manner that allows a non-expert manager to easily control the systems. For example, within the system of FIG. 3, processor 111 can be programmed to provide users recognized as system managers with an HTML "rating header" prior to the lead page of each retrieved network resource. If a manager retrieved the AT&T 800 Directory (trade mark) network resource via public network 100, the returned information would be labeled by processor 111 to reflect a non-violent rating (see FIG. 4, note the "NV" designation that precedes the retrieved resource - the AT&T 800 Directory (trade mark). The manager may review the reasoning behind the rating by clicking on the portion of the HTML rating page labeled "click here". This results in the retrieval from resource categorization information listing 300 of the rationale upon which the NV rating was based (see the page shown in FIG. 5). If the manager wished to disagree with the assigned rating upon retrieving the AT&T 800 Directory resource, he or she would click on "*If you disagree, click here*". This retrieves rating and rationale information from resource categorization information listing 300, and provides the manager with a page that facilitates editing of the rating (see FIG. 6). This page provides the manager with the current rating of the resource ("NV"), the main reason it was rated as such ("zero violent content"), and an area for entering a more detailed reason ("The resource consists of telephone listings ..."). Upon completing, or modifying this HTML page, the system manager would select "Send Message" and thereby transmit the page to relational database 302 for storage within listing 300.

It will be understood that the particular system and method described above is only illustrative of the principles of the present invention, and that various modifications could be made by those skilled in the art without departing from the scope of the present invention, which is defined by the claims that follow. The relational database could be modified to store sets of information indicative of the particular type of request format being employed, and associated with a particular user class. Yet another modification would involve the adaptation to a multi-manager environment. In such an environment, network resource ratings could be arrived at as a result of voting among a number of system managers. For example, a number of managers could submit or alter a resource's rating, but the ultimate rating stored in the relation database would be an averaging of the submitted ratings, or whatever the majority of the managers chose as the rating of the particular resource. The relational database utilized in systems facilitating the invention could also be configured so that information indicative of allowable resource access is arranged to conform to resources that are configured in a tree structure format (such as a hierarchical directory arrangement). Such a relational database would include a listing of directory and/or subdirectory identifiers that could be labeled with a particular resource rating. The system could be configured so that resources located within a directory or subdirectory so labeled, would assume the rating of the overall directory/subdirectory. Alternatively, the system could employ a prioritized directory/subdirectory rating system. In such a system, a directory would be assigned an overall rating such as "NV". Particular items or subdirectories within this NV rated directory could then be labeled with specific ratings outside of "NV", such as "V". When a user accessed the NV rated directory, all items within it would be assumed to have an NV rating, except those items or subdirectories labeled with some other, more specific and different rating.

## Claims

1. A system for selectively restricting access to one or more otherwise public network resources (101...105), comprising:
a relational database (114,200,302) containing a first stored listing (116, 202, 300) that associates a plurality of resource identifiers with at least one resource rating, and a second stored listing (115, 201, 301) that associates a plurality of user identification codes with at least one user clearance rating;
a processor (111) adapted to: (a) receive, from a user site (106), a request for network access to one or more particular network resources (101-105) of a public network (100) connected to the user site (106) via a firewall (113), said request including a resource identifier including a uniform resource locator URL and a user identification code and (b) query said first and second listings (115, 116; 202, 201; 300,341) within said relational database, (114, 200, 302) and to execute said request for network access to said one or more particular network resources as a function of the resource rating shown to be associated with said received resource identifier within said first listing (116, 202, 300) and the user clearance rating shown to be associated with said received user identification code within said second listing (115, 201, 301).

2. A system as claimed in claim 1 wherein said plurality of resource identifiers associated with at least one resource rating are arranged in a hierarchical directory data structure.

3. A system as claimed in claim 2 wherein said plurality of resource identifiers arranged in said hierarchical directory data structure are associated with more than one resource rating.

4. A system as claimed in any preceding claim wherein at least one of said one or more particular network resources includes at least one image.

5. A system as claimed in any preceding claim wherein said processor (111) is programmed to execute said request for access if said resource rating associated with said received resource identifier within said first listing, corresponds to at least one of said user clearance ratings associated with said received user identification code within said second listing.

6. A system as claimed in any of claims 1 to 4 wherein said processor (111) is programmed to deny execution of said request for access if said resource rating associated with said received resource identifier within said first listing does not correspond to at least one of said user clearance ratings associated with said received user identification code within said second listing.

7. A system as claimed in any of the preceding claims wherein said processor (111) is contained within a network proxy server (112).

8. A system as claimed in any of the preceding claims wherein each of said user identification codes identifies one or more terminals (107, 108, 109) adapted for facilitating network access to one or more particular network resources.

9. A system as claimed in any of claims 1 to 7 wherein each of said user identification codes identifies one or more individuals authorised to access one or more particular network resources.

10. A system as claimed in any of the preceding claims wherein said relational database (114, 200, 302) further includes a data listing associated with one or more of said plurality of resource identifiers, wherein said data listing represents textual information related to the resource rating shown to be associated with said one or more of said plurality of resource identifiers within said first listing.

11. A system as claimed in any of the preceding claims wherein said relational database (114, 200, 302) further includes a conditional data listing associated with one or more of said resource identifiers, wherein said conditional data listing represents information indicative of specific conditions under which requests for network access to particular network resources associated with said resource identifier can be executed, and wherein said processor (111) is further adapted to execute said request for network access to said one or more particular network resources as a function of said conditional data listing.

12. A system as claimed in any of the preceding claims wherein said relational database (114, 200, 302) further comprises a stored listing of at least one system manager identifier, and said processor (111) is adapted to identify a user as a system manager on the basis of said system manager identifier listing, and thereby permit said identified system manager to modify the content of said relational database.

13. A system as claimed in claim 12 wherein said relational database further comprises a stored listing containing at least one HTML page adapted to facilitate the modification of the contents of said relational database by said identified system manager.

14. A method of selectively restricting access to one or more otherwise public network resources, (101... 105) the method comprising the steps of
receiving, from a user site (106), a request for access to one or more particular network resources (101-105) of a public network (100) connected to the user site (106) via a firewall (113), wherein said request includes a user identification code and a resource identifier including a uniform resource identifier URL;
comparing said received request for access to a relational database (114, 200, 302) containing a stored listing (115, 116; 201, 202; 300, 301) of user identification codes and resource identifiers, wherein each of said resource identifiers is associated with at least one resource rating, and wherein each of said user identification codes is associated with at least one user clearance rating;
executing said request for access as a function of the resource rating shown to be associated with said received resource identifier within said stored listing, and the user clearance rating shown to be associated with said received user identification code within said stored listing.

15. A method as claimed in claim 14 wherein at least one of said one or more particular network resources includes at least one image.

16. A method as claimed in claim 14 or claim 15 wherein the execution of said request for access is performed if said stored listing shows said received user identification code to be associated with at least one user clearance corresponding to at least one resource rating shown to be associated with said one or more particular network resources.

17. A method as claimed in claim 14 or claim 15 wherein the execution of said request for access is denied if said stored listing shows said received user identification code not to be associated with at least one user clearance corresponding to at least one resource rating shown to be associated with said one or more particular network resources.

18. A method as claimed in any of claims 14 to 17 wherein each of said user identification codes identifies one or more terminals (107, 108, 109) adapted for facilitating network access to one or more particular network resources.

19. A method as claimed in any of claims 14 to 18 wherein each of said user identification codes identifies one or more individuals authorised to access one or more particular network resources.

20. A method as claimed in any of claims 14 to 19 further comprising the step of providing a user with access to a data listing within said relational database, wherein said data listing is associated with one or more of said plurality of resource identifiers, and wherein said data listing represents textual information related to the resource rating shown to be associated with said one or more of said plurality of resource identifiers within said stored listing.

21. A method as claimed in any of claims 14 to 20 wherein said relational database further comprises a stored listing of at least one system manager identifier, and the method further includes the step of identifying a user as a system manager on the basis of said system manager identifier listing, and thereby permitting said identified system manager to modify the contents of said relational database.

## Patentansprüche

1. System zum selektiven Einschränken des Zugriffs auf eine oder mehrere im übrigen öffentliche Netzwerkressourcen (101.... 105), mit:
einer relationalen Datenbank (114, 200, 302), die eine erste gespeicherte Auflistung (116, 202, 300), die eine Vielzahl von Ressourcen-Kennungen zumindest einer Ressourcen-Einstufung zuordnet, und eine zweite gespeicherte Auflistung (115, 201, 301), die eine Vielzahl von Anwender-Kennungscodes zumindest einer Anwender-Zulassungseinstufung zuordnet, enthält;
einem Prozessor (111), der geeignet ist, (a) von einem Anwender-Standort (106) eine Anfrage nach einem Netzwerkzugriff auf eine oder mehrere bestimmte Netzwerkressourcen (101-105) eines öffentlichen Netzwerks (100) zu empfangen, das mit dem Anwender-Standort (106) über eine Firewall (113) verbunden ist, wobei die Anfrage eine Ressourcen-Kennung mit einer einheitlichen Ressourcen-Adresse URL und einem Anwender-Kennungscode aufweist, und (b) die erste und zweite Auflistung (115, 116; 202, 201; 300, 301) in der relationalen Datenbank (114, 200, 302) abzufragen und die Anfrage nach einem Netzwerkzugriff auf die eine oder die mehreren Netzwerlaessourcen als Funktion der Ressourcen-Einstufung, die in der ersten Auflistung (116, 202, 300) als der empfangenen Ressourcen-Kennung zugeordnet aufgeführt ist, und der Anwender-Zulassungseinstufung, die in der zweiten Auflistung (115, 201, 301) als dem empfangenen Anwender-Kennungscode zugeordnet aufgeführt ist, auszuführen.

2. System nach Anspruch 1, wobei die Vielzahl von Ressourcen-Kennungen, die zumindest einer Ressourcen-Einstufung zugeordnet ist, in einer hierarchischen Verzeichnisdatenstruktur angeordnet ist.

3. System nach Anspruch 2, wobei die Vielzahl von Ressourcen-Kennungen in der hierarchischen Verzeichnisdatenstruktur mehr als einer Ressourcen-Einstufung zugeordnet ist.

4. System nach einem der vorhergehenden Ansprüche, wobei zumindest eine der einen oder der mehreren bestimmten Netzwerkressourcen zumindest ein Bild aufweist.

5. System nach einem der vorhergehenden Ansprüche, wobei der Prozessor (111) programmiert ist, die Anfrage nach einem Zugriff auszuführen, wenn die Ressourcen-Einstufung, die der empfangenen Ressourcen-Kennung in der ersten Auflistung zugeordnet ist, zumindest einer der Anwender-Zulassungseinstufungen entspricht, die dem empfangenen Anwender-Kennungscode in der zweiten Auflistung zugeordnet-ist.

6. System nach einem der Ansprüche 1 bis 4, wobei der Prozessor (111) programmiert ist, eine Ausführung der Anfrage nach einem Zugriff zurückzuweisen, wenn die Ressourcen-Einstufung, die der empfangenen Ressourcen-Kennung in der ersten Auflistung zugeordnet ist, nicht zumindest einer der Anwender-Zulassungseinstufungen entspricht, die dem empfangenen Anwender-Kennungscode in der zweiten Auflistung zugeordnet ist

7. System nach einem der vorhergehenden Ansprüche, wobei der Prozessor (111) in einem Netzwerk-Proxyserver (112) enthalten ist.

8. System nach einem der vorhergehenden Ansprüche, wobei jeder der Anwender-Kennungscodes einen oder mehrere Endgeräte (107, 108, 109) identifiziert, die zur Erleichterung eines Netzwerkzugriffs auf eine oder mehrere bestimmte Netzwerkressourcen geeignet sind.

9. System nach einem der Ansprüche 1 bis 7, wobei jeder der Anwender-Kennungscodes einen oder mehrere Einzelpersonen identifiziert, die berechtigt sind, auf eine oder mehrere bestimmte Zweckressourcen zuzugreifen.

10. System nach einem der vorhergehenden Ansprüche, wobei die relationale Datenbank (114, 200, 302) ferner eine Datenauflistung aufweist, die einer oder mehreren aus der Vielzahl von Ressourcen-Kennungen zugeordnet ist, wobei die Datenauflistung Textinformation in bezug auf die Ressourcen-Einstufung darstellt, die in der ersten Auflistung als der einen oder den mehreren aus der Vielzahl von Ressourcen-Kennungen zugeordnet aufgeführt ist.

11. System nach einem der vorhergehenden Ansprüche, wobei die relationale Datenbank (114, 200, 302) ferner eine bedingte Datenauflistung aufweist, die einer oder mehreren der Ressourcen-Kennungen zugeordnet ist, wobei die bedingte Datenauflistung Information darstellt, die spezifische Bedingungen angibt, unter denen Anfragen nach einem Netzwerkzugriff auf bestimmte Netzwerkressourcen, die der Ressourcen-Kennung zugeordnet sind, ausgeführt werden können, und wobei der Prozessor (111) ferner geeignet ist, die Anfrage nach einem Netzwerkzugriff auf die eine oder mehreren bestimmten Netzwerlaessourcen als Funktion der bedingten Datenauflistung auszuführen.

12. System nach einem der vorhergehenden Ansprüche, wobei die relationale Datenbank (114, 200, 302) ferner eine gespeicherte Auflistung zumindest einer Systemverwalter-Kennung umfaßt und der Prozessor (111) geeignet ist, einen Anwender als Systemverwalter auf der Grundlage der Systemverwalter-Kennungsauflistung zu identifizieren und dadurch zu erlauben, daß der identifizierte Systemverwalter den Inhalt der relationalen Datenbank modifiziert.

13. System nach Anspruch 12, wobei die relationale Datenbank ferner eine gespeicherte Auflistung umfaßt, die zumindest eine HTML-Seite enthält, die geeignet ist, die Modifikation des Inhalts der relationalen Datenbank durch den identifizierten Systemverwalter zu erleichtern.

14. Verfahren zum selektiven Einschränken des Zugriffs auf eine oder mehrere im übrigen öffentliche Netzwerkressourcen (101 ... 105), wobei das Verfahren die folgenden Schritte umfaßt:
Empfangen einer Anfrage von einem Anwender-Standort (106) nach einem Zugriff auf eine oder mehrere bestimmte Netzwerkressourcen (101-105) eines öffentlichen Netzwerks (100), das mit dem Anwenderstandort (106) über eine Firewall (113) verbunden ist, wobei die Anfrage einen Anwender-Kennungscode und eine Ressourcen-Kennung mit einer einheitlichen Ressourcen-Adresse URL aufweist;
Vergleichen der empfangenen Anfrage nach einem Zugriff auf eine relationale Datenbank (114, 200, 302), die eine gespeicherte Auflistung (115, 116; 201, 202; 300, 301) von Anwender-Kennungscodes und Ressourcen-Kennungen enthält, wobei jede der Ressourcen-Kennungen zumindest einer Ressourcen-Einstufung zugeordnet ist und wobei jede der Anwender-Kennungscodes zumindest einer der Anwender-Zulassungseinstufungen zugeordnet ist;
Ausführen der Anfrage nach einem Zugriff als Funktion der Ressourcen-Einstufung, die in der gespeicherten Auflistung als der empfangenen Ressourcen-Kennung zugeordnet aufgeführt ist, und der Anwender-Zulassungseinstufung, die in der gespeicherten Auflistung als dem empfangenen Anwender-Kennungscode zugeordnet aufgeführt ist.

15. Verfahren nach Anspruch 14, wobei. zumindest eine der einen oder mehreren bestimmten Netzwerkressourcen zumindest ein Bild aufweist,

16. Verfahren nach Anspruch 14 oder 15, wobei die Ausführung der Anfrage nach einem Zugriff durchgeführt wird, wenn die gespeicherte Auflistung zeigt, daß der empfangene Anwender-Kennungscode zumindest einer Anwender-Zulassung zugeordnet ist, die zumindest einer Ressourcen-Einstufung entspricht, die als der einen oder den mehreren Netzwerkressourcen zugeordnet aufgeführt ist.

17. Verfahren nach Anspruch 14 oder 15, wobei die Ausführung der Anfrage nach einem Zugriff zurückgewiesen wird, wenn die gespeicherte Auflistung zeigt, daß der empfangene Anwender-Kennungscode nicht zumindest einer Anwender-Zulassung zugeordnet ist, die zumindest einer Ressourcen-Einstufung entspricht, die als der einen oder den mehreren Netzwerkressourcen zugeordnet aufgeführt ist.

18. Verfahren nach einem der Ansprüche 14 bis 17, wobei jeder der Anwender-Kennungscodes ein oder mehrere Endgeräte (107, 108, 109) identifiziert, die zur Erleichterung eines Netzwerkzugriffs auf eine oder mehrere bestimmte Netzwerkressourcen geeignet sind.

19. Verfahren nach einem der Ansprüche, 14 bis 18, wobei jeder der Anwender-Kennungscodes eine oder mehrere Einzelpersonen identifiziert, die berechtigt sind, auf eine oder mehrere bestimmte Netzwerkressourcen zuzugreifen.

20. Verfahren nach einem der Ansprüche 14 bis 19, ferner mit den folgenden Schritten: Gewähren von Zugriff für einen Anwender auf eine Datenauflistung in der relationalen Datenbank, wobei die Datenauflistung einer oder mehreren aus der Vielzahl von Ressourcen-Kennungen zugeordnet ist und wobei die Datenauflistung Textinformation in bezug auf die Ressourcen-Einstufung darstellt, die in der gespeicherten Auflistung als der einen oder den mehreren aus der Vielzahl von Ressourcen-Kennungen zugeordnet aufgeführt ist,

21. Verfahren nach Anspruch 14 bis 20, wobei die relationale Datenbank ferner eine gespeicherte Auflistung zumindest einer Systemverwalter-Kennung umfaßt und das Verfahren femer den folgenden Schritt umfaßt: Identifizieren eines Anwenders als Systemverwalter auf der Grundlage der Systemverwalter-Kennungsauflistung und dadurch Erlauben, daß der identifizierte Systemverwalter den Inhalt der relationalen Datenbank modifiziert.

## Revendications

1. Système destine à limiter sélectivement l'accès à une ou plusieurs ressources du réseau, autrement public (101... 105), comprenant:
une base de données relationnelle (114, 200, 302) contenant une première liste enregistrée (116, 202, 300) associant plusieurs identificateurs de ressources à au moins une évaluation des ressources, et une deuxième liste enregistrée (115, 201, 301) associant plusieurs codes d'identification de l'utilisateur à au moins une évaluation de l'habilitation de l'utilisateur;
un processeur (111) destiné à: (a) recevoir, d'un site utilisateur (106), une demande d'accès au réseau pour une ou plusieurs ressources de réseau spécifiques (101-105) d'un réseau public (100) connecté au site utilisateur (106) par l'intermédiaire d'un pare-feu (113), ladite demande englobant un identificateur des ressources englobant un localisateur de ressources individuel URL et un code d'identification de l'utilisateur, et (b) explorer lesdites première et deuxième listes (115; 116; 202, 201; 300, 301) dans ladite base de données relationnelle (114, 200, 302) et à exécuter ladite demande concernant l'accès au réseau pour ladite une ou lesdites plusieurs ressources de réseau spécifiques sur la base de l'évaluation des ressources représentées comme associées audit identificateur de ressources enregistré dans ladite première liste (116, 202, 300) et de l'évaluation de l'habilitation de l'utilisateur représentée comme associée audit code d'identification de l'utilisateur enregistré dans ladite deuxième liste (115,201, 301).

2. Système selon la revendication 1, dans lequel lesdits plusieurs identificateurs de ressources associés à au moins une évaluation des ressources sont arrangées dans une structure de données de répertoire hiérarchique.

3. Système selon la revendication 2, dans lequel lesdits plusieurs identificateurs de ressources arrangées dans ladite structure de données de répertoire hiérarchique sont associés à plus d'une évaluation des ressources.

4. , Système selon l'une quelconque des revendications précédentes, dans lequel au moins une de ladite une ou desdites plusieurs ressources de réseau spécifiques englobe au moins une image.

5. Système selon l'une quelconque des revendications précédentes, dans lequel ledit processeur (111) est programmé de sorte à exécuter ladite demande d'accès lorsque ladite évaluation des ressources associée audit identificateur de ressources enregistré dans ladite première liste correspond à au moins une desdites évaluations d'habitation de l'utilisateur associées audit code d'identification de l'utilisateur enregistré dans ladite deuxième liste.

6. Système selon l'une quelconque des revendications 1 à 4, dans lequel ledit processeur (111) est programmé de sorte à refuser l'exécution de ladite demande d'accès lorsque ladite évaluation des ressources associée audit identificateur des ressources enregistré dans ladite première liste ne correspond pas à au moins une desdites évaluations d'habilitation de l'utilisateur associée audit code d'identification de l'utilisateur enregistré dans ladite deuxième liste.

7. Système selon l'une quelconque des revendications précédentes, dans lequel ledit processeur (111) est contenu dans un serveur de procuration du réseau (112).

8. Système selon l'une quelconque des revendications précédentes, dans lequel chacun desdits codes d'identification de l'utilisateur identifie un ou plusieurs terminaux (107, 108, 109) destinés à faciliter l'accès au réseau pour une ou plusieurs ressources de réseau spécifiques.

9. Système selon l'une quelconque des revendications 1 à 7, dans lequel chacun desdits codes d'identification de l'utilisateur identifie un ou plusieurs individus autorisés à accéder à une ou plusieurs ressources de réseau spécifiques.

10. Système selon l'une quelconque des revendications précédentes, dans lequel ladite base de données relationnelle (114, 200, 302) englobe en outre une liste de données associée à un ou plusieurs desdits plusieurs identificateurs de ressources, ladite liste de données représentant des informations de texte concernant l'évaluation des ressources associée audit un ou auxdits plusieurs identificateurs de ressources dans ladite première liste.

11. Système selon l'une quelconque des revendications précédentes, dans lequel ladite base de données relationnelle (114, 200, 302) englobe en outre une liste de données conditionnelle associée à un ou plusieurs desdits identificateurs de ressources, ladite liste de données conditionnelle représentant des informations concernant des conditions spécifiques en présence desquelles des demandes d'accès au réseau pour des ressources de réseau spécifiques associées audit identificateur de ressources peuvent être exécutées, ledit processeur (111) étant en outre destiné à exécuter ladite demande d'accès au réseau pour ladite une ou lesdites plusieurs ressources de réseau spécifiques sur la base de ladite liste de données conditionnelle.

12. Système selon l'une quelconque des revendications précédentes, dans lequel ladite base de données relationnelle (114, 200, 302) comprend en outre une liste enregistrée d'au moins un identificateur du gestionnaire du système, ledit processeur (111) étant destiné à identifier un utilisateur comme gestionnaire du système sur la base de ladite liste d'identification du gestionnaire du système, pour permettre ainsi audit gestionnaire du système identifié de modifier le contenu de ladite base de données relationnelle.

13. Système selon la revendication 12, dans lequel ladite base de données relationnelle comprend en outre une liste enregistrée contenant au moins une page HTML destinée à faciliter la modification du contenu de ladite base de données relationnelle par ledit gestionnaire du système identifié.

14. Procédé de limitation sélective de l'accès à une ou plusieurs ressources de réseau, autrement public, (101... 105), le procédé comprenant les étapes ci-dessous:
réception, d'un site utilisateur (106), d'une demande d'accès à une ou plusieurs ressources de réseau spécifiques (101-105) d'un réseau public (100) connecté au site utilisateur (106) par l'intermédiaire d'un pare-feu (113), ladite demande englobant un code d'identification de l'utilisateur et un identificateur des ressources englobant un localisateur de ressources universel URL;
comparaison de ladite demande d'accès reçue à une base de données relationnelle (114, 200, 302) contenant une liste enregistrée (115, 116; 201, 202; 300, 301) de codes d'identification de l'utilisateur et des identificateurs des ressources, chacun desdits identificateurs de ressources étant associé à au moins une évaluation des ressources, chacun desdits codes d'identification de l'utilisateur étant associé à au moins une évaluation de l'habilitation de l'utilisateur;
exécution de ladite demande d'accès sur la base d'une évaluation des ressources représentée comme associée audit identificateur des ressources enregistré dans ladite liste enregistrée, et de l'évaluation de l'habilitation de l'utilisateur représentée comme associée audit code d'identification de l'utilisateur enregistré dans ladite liste enregistrée.

15. Procédé selon la revendication 14, dans lequel au moins une de ladite une ou desdites plusieurs ressources de réseau spécifiques englobe au moins une image.

16. Procédé selon les revendications 14 ou 15, dans lequel l'exécution de ladite demande d'accès est effectuée si ladite liste enregistrée indique que ledit code d'identification de l'utilisateur enregistrée est associé à au moins une habilitation de l'utilisateur correspondant à au moins une évaluation des ressources représentées comme associées à ladite une ou auxdites plusieurs ressources de réseau spécifiques.

17. Procédé selon les revendications 14 ou 15, dans lequel l'exécution de ladite demande d'accès est refusée si ladite liste enregistrée indique que ledit code d'identification de l'utilisateur enregistrée n'est pas associé à au moins une habilitation de l'utilisateur correspondant à au moins une évaluation des ressources représentées comme associées à ladite une ou auxdites plusieurs ressources de réseau spécifiques.

18. Procédé selon l'une quelconque des revendications 14 à 17, dans lequel chacun desdits codes d'identification de l'utilisateur identifie un ou plusieurs terminaux (107, 108, 109) destinés à faciliter l'accès au réseau pour une ou plusieurs ressources de réseau spécifiques.

19. Procédé selon l'une quelconque des revendications 14 à 18, dans lequel chacun desdits codes d'identification de l'utilisateur identifie un ou plusieurs individus autorisés à accéder à une ou plusieurs ressources de réseau spécifiques.

20. Procédé selon l'une quelconque des revendications 14 à 19, comprenant en outre l'étape d'autorisation d'un utilisateur d'accéder à une liste de données enregistrée dans ladite base de données relationnelle, ladite liste de données étant associée à un ou plusieurs desdits identificateur de ressources, ladite liste de données représentant des informations de texte concernant l'évaluation des ressources représentées comme associées audit un ou auxdits plusieurs identificateurs de ressources dans ladite liste enregistrée.

21. Procédé selon l'une quelconque des revendications 14 à 20, dans lequel ladite base de données relationnelle comprend en outre une liste enregistrée d'au moins un identificateur du gestionnaire du réseau, le procédé englobant l'étape additionnelle d'identification d'un utilisateur comme gestionnaire du système sur la base de ladite liste d'identification du gestionnaire du système, pour permettre ainsi audit gestionnaire du système identifié de modifier le contenu de ladite base de données relationnelle.
